# EUROPÄISCHE PATENTSCHRIFT

(11) **EP 0 958 471 B1**
(45) Veröffentlichungstag und Bekanntmachung des Hinweises auf die Patenterteilung: **27.08.2003**
(21) Anmeldenummer: 98965231.8
(22) Anmeldetag: 04.12.1998
(51) Int. Cl.: F16L 59/02

(54) **ISOLATIONSELEMENT**
INSULATION ELEMENT
ELEMENT D'ISOLATION

(30) Priorität: 05.12.1997 DE 19753830; 22.10.1998 DE 19848677
(43) Veröffentlichungstag der Anmeldung: 24.11.1999
(73) Patentinhaber: Illbruck GmbH, 51381 Leverkusen (DE); Airbus Deutschland GmbH, 21129 Hamburg (DE)
(72) Erfinder: ARNDT, Rainer, D-51373 Leverkusen (DE); CZERNY, Hans-Rudolf, D-53913 Swistal (DE)
(74) Vertreter: Müller, Enno, Dipl.-Ing.
(86) Internationale Anmeldenummer: EP9807887
(87) Internationale Veröffentlichungsnummer: WO99030074

(56) Entgegenhaltungen:
- EP-A- 0 736 723
- EP-A- 0 793 052
- DE-U- 9 410 456
- US-A- 5 104 700

## Beschreibung

Die Erfindung betrifft ein Isolationselement

Derartige Isolationselemente sind bereits in verschiedener Form bekanntgeworden (siehe z.B. DE-U-9410456 oder EP-A-0136723). Die bekannten Isolationselemente sind jedoch in bezug auf verschiedene Anforderungen, die immer mehr kombinativ verwirklicht sein sollen, noch nicht in jeder Hinsicht zufriedenstellend. Zu diesen Anforderungen zählt eine hohe Schallabsorption und Schalldämmung (gekennzeichnet durch den Absorptionskoeffizienten aₛ und das Schalldämmaß R). Weiter auch eine hohe Wärmedämmung (gekennzeichnet mit lambda) sowie eine geringe Flüssigwasserbildung bei großen Temperaturgradienten und großen Luftfeuchtegradienten. Dies auch möglichst kombiniert mit vergleichsweise geringen Flächengewichten und einer guten Handhabbarkeit als Einbauelement.

Die Erfindung beschäftigt sich daher mit der technischen Problematik, ein Isolationselement auf Vliesbasis anzugeben, das sich durch eine hohe Erfüllung einer oder mehrerer der vorgenannten Anforderungen auszeichnet.

Diese technische Problematik ist beim Gegenstand des Anspruches 1 gelöst. Das Isolationselement weist einen Schichtaufbau aus unterschiedlichen Vliesen. oder aus unterschiedlichen Schaumstoffen auf. In dem erstgenannten Fall können die unterschiedlichen Vliese auch mit einer oder mehreren Schaumstoffschichten und im zweitgenannten Fall die unterschiedlichen Schaumstoffe auch mit einer oder mehreren Vliesschichten kombiniert sein. Die - bevorzugt unterschiedlichen - Verdichtungsgrade sind vorteilhaft durch unterschiedliche Fasern und/oder Vliesherstellungsverfahren und/oder Schaumstoffe unterschiedlicher Dichten erreicht. Eine Vlieslage oder eine Schaumstofflage, bspw. eine Vlieslage aus Bauschvlies oder eine Schaumstofflage aus Polyimid-Schaumstoff, ist sehr leichtgewichtig, bei vergleichsweise großem Volumen, ausgebildet. Es gibt größere Zwischenräume zwischen den Fasern. Eine weitere Vlieslage, hier im Beispielsfall ein Schmelz-Spinnvlies, ist dichter aufgebaut. Durch die lagenmäßige Zusammenführung verschiedener Vliese oder von Vlies und Schaumstoffen werden kombinativ die unterschiedlichen Eigenschaften, insbesondere im Hinblick auf eine Schallabsorption, ausgenutzt. Besonders bevorzugt ist es, eine Mittellage als Bauschvlieslage auszubilden oder als Lage aus einem schaumstoffgeringen Volumengewicht und beidseitig einer solchen Mittellage ein Vlies mit einer höheren Verdichtung, bspw. eine Lage als einem Schmelz-Spinnvlies, anzuordnen. Die Mittellage ist auch bevorzugt mit einer größeren Dicke ausgebildet als die weiteren Lagen, insbesondere die weiteren Vlieslagen. Im Beispielsfall eben die Lagen aus Schmelz-Spinnvlies. Die Vlieslage geringerer Dichte, hier also bevorzugt die Mittellage, besitzt bevorzugt auch ein Mehrfaches der Dicke der Vliesschicht größerer Dichte, hier also der beiden weiteren Vlieslagen aus Schmelz-Spinnvlies. Die tagen können weiter durch Folienlagen abgedeckt sein. Insbesondere sind die Folienlagen als Außenlagen vorgesehen. Auch können die Folienlagen zusätzlich als Zwischenlagen vorgesehen sein. Die Außenfolien sind weiter bevorzugt randverschweißt, jedoch können die Vlies- oder Schaumstofflagen sämtlich oder zum Teil mit in die Schweißnaht integriert sein. Etwa durch eine bis nahe auf Null gehende Randverdichtung der Vliesoder Schaumstofflagen. Eine solche Randverdichtung kann auch zur Bauteilformgebung genutzt werden. Auch können Befestigungselemente in eine solche Schweißnaht integriert werden. Die Zusammenfügung der Außenfolien ist hierbei geeigneterweise derart, daß der Gesamtverbund allein durch die randverbundenen oder randverschweißten Folien und ggf. Vlies- oder Schaumstofflagen zusammengehalten ist. Eine Verklebung, Kaschierung oder dergleichen der einzelnen Lagen ist nicht erforderlich und bevorzugt auch nicht vorgesehen. Die Lagen sind - jedenfalls außerhalb des Randbereiches - nur einfach übereinandergelegt. Es ergibt sich gleichsam ein Kissen mit einer durch die Außenfolien gebildeten Hülle. Partielle, durch Verschweißungen, insbesondere im Randbereich herbeigefügte Verdichtungen können zur Aufnahme von Befestigungselementen und/oder Versteifungen des Bauteiles beitragen. Die mehreren Vlieslagen, ggf. mit integrierter Schaumstofflage, führen zu einer Art Prallfüllung. Für den Gegenstand ist auch von Bedeutung, daß die Flüssigwasserbildung in dem Bauteil verringert ist. Die verwendeten Folien, sowohl die Außenfolien wie auch ggf. Zwischenfolien, weisen unterschiedliche Wasserdampfdurchlässigkeiten auf. Bevorzugt werden auch Folien verwendet, die richtungsaktive Wasserdampfdurchlässigkeiten aufweisen. Es können auch Folien eingesetzt werden, die feuchtigkeits- und/oder temperaturabhängige Wasserdampfdurchlässigkeiten aufweisen.

Nachstehend ist die Erfindung desweiteren anhand der beigefügten Zeichnung, die jedoch lediglich Ausführungsbeispiele darstellt, erläutert.

Hierbei zeigt:
- Fig. 1: eine teilweise aufgeschnittene perspektivische Ansicht eines Isolationsteils einer ersten Ausführungsform;
- Fig. 2: eine Darstellung entsprechend Fig. 1 eines zweiten Isolationsteils.

Das Isolationsteil 1 besteht aus einer unteren und oberen Abdeckfolie 2 bzw. 2' und aus drei mittigen Vlieslagen 3, 4 und 5. Die Vlieslagen 3 und 5 sind aus gleichartigem oder nicht gleichartigem Vliesmaterial gebildet. Die Fasern des Vliesmaterials bestehen aus einem Polymer wie bspw. PPS oder einer Mischung aus PPS und Copolyesther oder anderen organischen oder anorganischen Fasern. Die Flächengewichte der Vlieslagen 3, 4 und 5 liegen zwischen 50 und 800 g/m².

Die Fasern sind thermoplastisch und inhärent flammwidrig. Die Granulate, aus welchen die Vliesfasern gewonnen werden weisen eine bestimmte Schmelz-Viskosität auf. Die Vliese sind auch hydrolysebeständig. Zudem sind sie akustisch absorbierend sowie dämmend. Darüber hinaus wirken sie wärmeisolierend.

Die Dicken der Vlieslagen 3 und 5 betragen - im nicht komprimierten Zustand - etwa 1/3 bis 1/10 der Dicke der Vlieslage 4, bevorzugt etwa 1/5 der Dicke der Vlieslage 4. Die Dicke der Vlieslage 4 liegt absolut gesehen im Bereich von 1 bis 8 cm, bevorzugt bei etwa 5 cm.

Die Folienlagen 2 bzw. 2' sind faserverstärkte Folien sehr geringer Dicke. Die Dicke liegt zwischen 10 und 50 µm vorzugsweise bei 20 µm. Die Dichte liegt bei ca. 0,9 bis 1,4 g/cm³. Die Folien sind gleichfalls thermoplastisch und hydrolysebeständig. Insbesondere weisen sie auch aufeinander abgestimmte Wasserdampfdurchlässigkeiten auf.

Werkstoffmäßig kann es sich um inhärent flammwidrige Polymere handeln. Als Fasern können bspw. Glasfasern aber auch Melaminharzfasern aufkaschiert sein. Die Fasern sind durch das Raster in der Zeichnung angedeutet. Sie sind jedoch bevorzugt nur einseitig der Folie vorgesehen. Das Raster liegt zwischen etwa 1 und 5 mm. Es sind jeweils quer zueinander verlaufende Fasern vorgesehen.

Insgesamt ist das Isolationselement 1 mithin ein Verbund von dreidimensionalen und zweidimensionalen textilen Flächengebilden sowie Folien und/oder Schaumstoffen.

Die Vlieslagen 3, 4 5 können auch durch eine oder mehrere Lagen von einem Schaumstoff, wie insbesondere Polyimidschaumstoff-Plattenware, ersetzt sein.

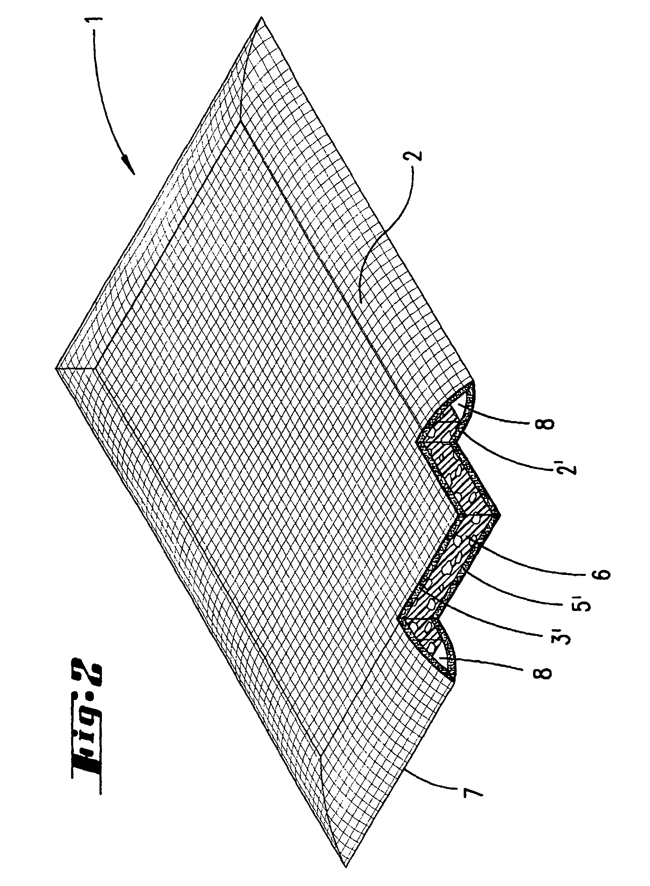

In Fig. 2 ist ein entsprechendes Ausführungsbeispiel dargestellt.

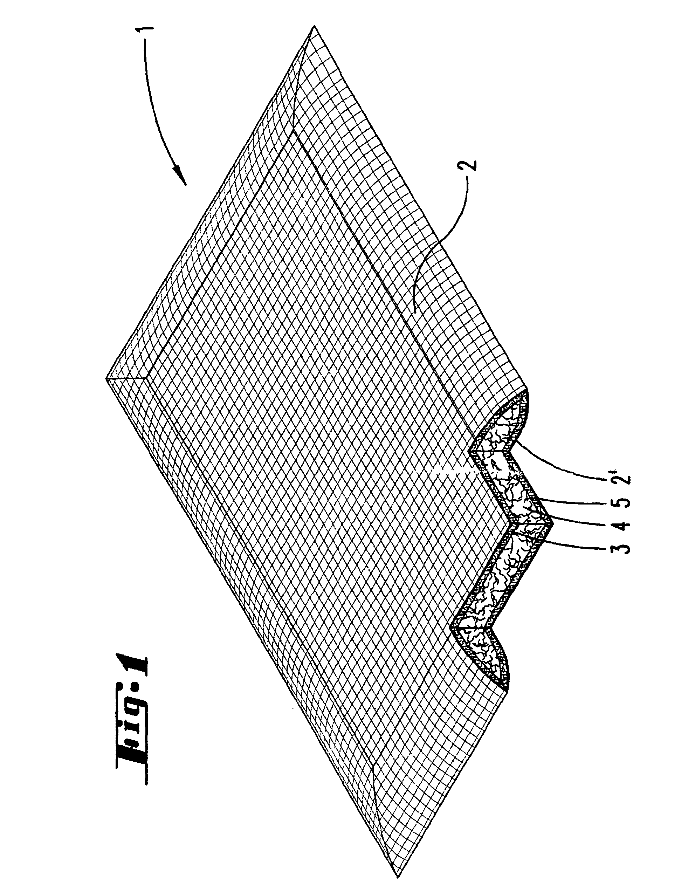

Im Folgenden sind im wesentlichen nur die Unterschiede zu dem Isolationsteil 1 gemäß Fig. 1 erläutert. Im übrigen wird auf die vorstehende Beschreibung des Isolationsteiles 1 verwiesen.

Bei dem Ausführungsbeispiel der Figur 2 ist eine mittlere Polyimid-Schaumstoff-Plattenware 6 vorgesehen, die beidseitig von Vlieslagen 3' und 5' überdeckt ist. Die Vlieslagen 3' und 5' sind bis an die Randkante 7 durchlaufend vorgesehen, während die Schaumstoff-Plattenware 6 vor der Randkante 7 endet. Es ergibt sich daher ein Zwickel 8. In der Praxis kann aber auch dieser Zwickel 8 noch mit Schaumstoff-Plattenware, etwa durch entsprechende Randkomprimierung, ausgefüllt sein. Darüber hinaus kann auch die Schaumstoff-Plattenware bis in die Randkante 7 einlaufend vorgesehen sein, durch entsprechende Komprimierung etwa im Zuge des Verschweißens. Bei der Schaumstoff-Plattenware 6 handelt es sich beim Ausführungsbeispiel um Polyimidschaumsoff.

## Patentansprüche

1. Isolationselement (1) auf Vlies- oder Schaumstoffbasis, mit einem Schichtaufbau aus unterschiedlichen Vliesen wie Bauschvlies oder Schmelz-Spinnvlies oder aus unterschiedlichen Schaumstoffen, wobei die Vlieslagen oder die Schaumstofflagen außerhalb des Randbereichs unverbunden übereinander liegen, die Lagen (3, 4, 5) mit Folienlagen (2,2') abgedeckt sind und die Folienlagen (2, 2') wasserdampfdurchlässige Membranfolien sind.

2. Isolationselement nach Anspruch 1, wobei die Folienlagen (2, 2') Zwischenlagen sind.

3. Isolationselement nach einem oder mehreren der vorhergehenden Ansprüche oder insbesondere danach, wobei die Bauschvliesschicht (4) dicker ist als die Schmelz-Spinnvliesschicht (3, 5).

4. Isolationselement nach einem oder mehreren der vorhergehenden Ansprüche oder insbesondere danach, wobei die Bauschvliesschicht (4) ein Mehrfaches der Dicke des Schmelz-Spinnvliesschicht (3, 5) aufweist.

5. Isolationselement nach einem oder mehreren der vorhergehenden Ansprüche oder insbesondere danach, wobei die Vlieslagen (3, 4, 5) weiter durch eine Folienlage (2, 2') abgedeckt sind.

6. Isolationselement nach einem oder mehreren der vorhergehenden Ansprüche oder insbesondere danach, wobei die Folienlagen (2, 2') Außenlagen sind.

7. Isolationselement nach einem oder mehreren der vorhergehenden Ansprüche oder insbesondere danach, wobei die Außenfolienlagen (2, 2') randverschweißt sind und das der Gesamtverbund hierdurch zusammengehalten ist.

8. Isolationselement nach einem oder mehreren der vorhergehenden Ansprüche oder insbesondere danach, wobei die Folienlagen (2, 2') wasserdampfdurchlässige Membranfolien sind.

9. Isolationselement nach einem oder mehreren der vorhergehenden Ansprüche oder insbesondere danach, wobei eine Schaumstoff läge vorgesehen ist.

10. Isolationselement nach einem oder mehreren der vorhergehenden Ansprüche oder insbesondere danach, wobei eine Schaumstofflage beidseitig durch eine Schmelz-Spinnvliesschicht abgedeckt ist.

11. Isolationselement nach einem oder mehreren der vorhergehenden Ansprüche oder insbesondere danach, wobei eine Schaumstofflage aus einer Polyimid-Plattenware besteht.

## Claims

1. Insulation element (1) based on a non-woven fabric or cellular material, with a layered construction consisting of various non-woven fabrics, such as high bulked non-woven fabric or melt spun-bonded fabric or of various cellular materials, wherein the layers of non-woven fabric or the layers of cellular material lie on top of one another unconnected outside the edge area, the layers (3, 4, 5) are covered with layers or foil (2, 2') and the layers of foil (2, 2') are water vapour permeable membrane foils.

2. Insulation element according to claim 1, wherein the layers of foil (2, 2') are intermediate layers.

3. Insulation element according to one or more of the preceding claims or in particular according to these, wherein the layer of high bulked non-woven fabric (4) is thicker than the layer of melt spun-bonded fabric (3, 5).

4. Insulation element according to one or more of the preceding claims or in particular according to these, wherein the layer of high bulked non-woven fabric (4) has a multiple of the thickness of the layer of melt spun-bonded fabric (3, 5).

5. Insulation element according to one or more of the preceding claims or in particular according to these,
wherein the layers of non-woven fabric (3, 4, 5) are further covered by a layer of foil (2, 2').

6. Insulation element according to one or more of the preceding claims or in particular according to these, wherein the layers of foil (2, 2') are outer layers.

7. Insulation element according to one or more of the preceding claims or in particular according to these, wherein the outer layers of foil (2, 2') are edge-welded and the overall bond is hereby held together.

8. Insulation element according to one or more of the preceding claims or in particular according to these, wherein the layers of foil (2, 2') are water vapour permeable membrane foils.

9. Insulation element according to one or more of the preceding claims or in particular according to these, wherein a layer of cellular material is provided.

10. Insulation element according to one or more of the preceding claims or in particular according to these, wherein a layer of cellular material is covered on both sides by a layer of melt spun-bonded fabric.

11. Insulation element according to one or more of the preceding claims or in particular according to these, wherein a layer of cellular material consists of a polyamide sheet product.

## Revendications

1. Elément d'isolation (1) sur la base de matières fibreuses ou alvéolaires, avec une structure en strates de différentes matières fibreuses non tissées telles qu'une matière fibreuse non tissée bouffante ou une matière fibreuse non tissée obtenue par filature à chaud ou composée de différentes matières alvéolaires, dans lequel élément les strates de matières fibreuses non tissées ou les strates de matières alvéolaires hors de la zone de bordure, sont disposées l'une sur l'autre de façon non reliée, les strates (3, 4, 5) étant recouvertes de strates sous forme de feuilles (2, 2'), et les strates sous forme de feuilles (2, 2') étant des feuilles sous forme de membrane perméable à la vapeur d'eau.

2. Elément d'isolation selon la revendication 1, dans lequel les strates sous forme de feuilles (2, 2') sont des strates intermédiaires.

3. Elément d'isolation selon, ou en particulier selon, l'une ou plusieurs des revendications précédentes, dans lequel la strate en matière fibreuse non tissée bouffante (4) est plus épaisse que la strate en matière fibreuse non tissée obtenue par filature à chaud (3, 5).

4. Elément d'isolation selon, ou en particulier selon, l'une ou plusieurs des revendications précédentes, dans lequel la strate en matière fibreuse non tissée bouffante (4) présente une épaisseur qui est un multiple de l'épaisseur de la strate en matière fibreuse non tissée obtenue par filature à chaud (3, 5).

5. Elément d'isolation selon, ou en particulier selon, l'une ou plusieurs des revendications précédentes, dans lequel les strates de matière fibreuse non tissée (3, 4, 5) sont en outre recouvertes d'une strate sous forme de feuille (2, 2').

6. Elément d'isolation selon, ou en particulier selon, l'une ou plusieurs des revendications précédentes, dans lequel les strates sous forme de feuilles (2, 2') sont des couches externes.

7. Elément d'isolation selon, ou en particulier selon, l'une ou plusieurs des revendications précédentes, dans lequel les couches de feuilles externes (2, 2') sont soudées sur les bords, de sorte que la structure composite soit maintenue assemblée.

8. Elément d'isolation selon, ou en particulier selon, l'une ou plusieurs des revendications précédentes, dans lequel les strates sous forme de feuilles (2, 2') sont des feuilles sous forme de membrane perméable à la vapeur d'eau.

9. Elément d'isolation selon, ou en particulier selon, l'une ou plusieurs des revendications précédentes, dans lequel une strate en matière alvéolaire est prévue.

10. Elément d'isolation selon, ou en particulier selon, l'une ou plusieurs des revendications précédentes, dans lequel une strate en matière alvéolaire est recouverte des deux côtés d'une strate en matière fibreuse non tissée obtenue par filature à chaud.

11. Elément d'isolation selon, ou en particulier selon, l'une ou plusieurs des revendications précédentes, dans lequel une strate en matière alvéolaire est composée d'un produit en plaques de polyimide.
